# EUROPÄISCHE PATENTSCHRIFT

(11) **EP 2 942 342 B1**
(45) Veröffentlichungstag und Bekanntmachung des Hinweises auf die Patenterteilung: **24.04.2019**
(21) Anmeldenummer: 15166763.1
(22) Anmeldetag: 07.05.2015
(51) Int. Cl.: C04B 41/50, C03C 10/00

(54) **VERFAHREN ZUM HERSTELLEN VON KERAMISCHEN WERKSTÜCKEN, DIE MIT EINER YTTRIUMHALTIGEN GLASKERAMIK-SCHICHT VERSEHEN SIND, SOWIE DIE MIT DIESEM VERFAHREN ERHALTENEN WERKSTÜCKE**
METHOD FOR THE PRODUCTION OF CERAMIC WORKPIECES WITH A GLASS CERAMIC LAYER CONTAINING YTTRIUM AND WORKPEICES OBTAINED BY SAID METHOD
PROCÉDÉ DE PRODUCTION DE PIÈCES EN CÉRAMIQUE POURVUES D'UNE COUCHE DE VITROCÉRAMIQUE CONTENANT DE L'YTTRIUM ET PIÈCES OBTENUES SELON LEDIT PROCÉDÉ

(30) Priorität: 09.05.2014 DE 102014106560
(43) Veröffentlichungstag der Anmeldung: 11.11.2015
(73) Patentinhaber: Fraunhofer-Gesellschaft zur Förderung der angewandten Forschung e.V., 80686 München (DE)
(72) Erfinder: Rüdinger, Arne, 97228 Rottendorf (DE); Durschang, Bernhard, 97228 Rottendorf (DE)
(74) Vertreter: Strehl Schübel-Hopf & Partner

(56) Entgegenhaltungen:
- DE-B4-102004 053 959
- US-A- 3 993 844
- FERRARIS M ET AL: "Joining of machined SiC/SiC composites for thermonuclear fusion reactors", JOURNAL OF NUCLEAR MATERIALS, ELSEVIER BV, NL, Bd. 375, Nr. 3, 30. April 2008 (2008-04-30), Seiten 410-415, XP022590091, ISSN: 0022-3115 [gefunden am 2008-02-23]
- ZHOU F: "Effect of adhesive composition on bonding of silicon nitride ceramic", CERAMICS INTERNATIONAL, ELSEVIER, AMSTERDAM, NL, Bd. 29, Nr. 3, 1. Januar 2003 (2003-01-01) , Seiten 293-298, XP004410398, ISSN: 0272-8842, DOI: 10.1016/S0272-8842(02)00118-9
- LIN Y J ET AL: "Joining of mullite ceramics with yttrium aluminosilicate glass interlayers", CERAMICS INTERNATIONAL, ELSEVIER, AMSTERDAM, NL, Bd. 35, Nr. 3, 1. April 2009 (2009-04-01), Seiten 1311-1315, XP025915340, ISSN: 0272-8842, DOI: 10.1016/J.CERAMINT.2008.06.006 [gefunden am 2008-07-19]
- HERRMANN MARION ET AL: "High-temperature stability of laser-joined silicon carbide components", JOURNAL OF NUCLEAR MATERIALS, Bd. 443, Nr. 1, 13. August 2013 (2013-08-13), Seiten 458-466, XP028770692, ISSN: 0022-3115, DOI: 10.1016/J.JNUCMAT.2013.07.067
- S.J. GLASS ET AL: "Refractory oxynitride joints in silicon nitride", ACTA MATERIALIA, Bd. 46, Nr. 7, 1. April 1998 (1998-04-01), Seiten 2393-2399, XP55212062, ISSN: 1359-6454, DOI: 10.1016/S1359-6454(98)80021-9
- SMEACETTO F ET AL: "Protective coatings for carbon bonded carbon fibre composites", CERAMICS INTERNATIONAL, ELSEVIER, AMSTERDAM, NL, Bd. 34, Nr. 5, 1. Juli 2008 (2008-07-01), Seiten 1297-1301, XP022666997, ISSN: 0272-8842, DOI: 10.1016/J.CERAMINT.2007.03.012 [gefunden am 2008-05-15]

## Beschreibung

Die vorliegende Erfindung betrifft ein Verfahren zum Herstellen von porösen, keramischen Werkstücken, die auf wenigstens einem Teil ihrer Oberfläche mit einer Glaskeramik-Schicht versehen sind, welche yttriumhaltige Kristallphasen aufweist. Das Verfahren lässt sich mit verschiedenen Zielrichtungen einsetzen: Zum einen gelingt es damit, poröse oxidkeramische Materialien gasdicht zu verschließen, darunter oxidkermische Faserverbundkeramiken, sogenannten O-CMC aus Keramikfasern, die in eine poröse keramische Matrix eingebettet sind. Zum anderen kann das Verfahren als Fügeverfahren ausgestaltet sein: In diesen Fällen wird ein erstes Werkstück mit den die spätere Glaskeramik-Schicht bildenden Glaspartikeln versehen und nach Erweichen der Partikel mit einem zweiten Werkstück gefügt, worauf durch Abkühlen eine Verbindung zwischen den beiden Werkstücken entsteht, welche aus der genannten yttriumhaltigen Glaskeramik-Schicht besteht. Das Verfahren umfasst das Aufbringen einer Suspension eines Pulvers aus Glasteilchen aus einer oxidischen Glasschmelze, die zumindest Yttrium, Silicium und Aluminium enthält, auf die zu verschließende oder zu fügende Oberfläche, worauf die Suspension mit Hilfe eines geeigneten Temperatur-Regimes erhitzt und wieder abgekühlt und dabei zumindest großenteils in kristalline Strukturen überführt wird.

Oxidkeramische Faserverbundkeramiken, sogenannten O-CMC, bestehen aus Keramikfasern, die in eine poröse keramische Matrix eingebettet sind, siehe W.E.C. Pritzkow, Cfi/Ber DKG 85 (2008) No. 12 E31-E35; W.E.C. Pritzkow, Oxidfaser verstärkte Oxidkeramik in: Prof. Dr. Jochen Kriegesmann, Technische Keramische Werkstoffe (Juli 2008); A. Rüdinger, W.E.C. Pritzkow, Keram. Z. 65, 166-169 (2013). O-CMC sind aufgrund der offenen Porenkanäle der Keramikmatrix nicht gasdicht.

Der herkömmliche Weg zur Herstellung von dichtsinternder Keramik, das Sintern bei hohen Temperaturen, ist bei O-CMC ausgeschlossen. Erstens würden die Keramikfasern bei hohen Temperaturen degradieren (D. Schawaller, Macromol. Mater. Eng. 2012, 297, 502-522) und zweitens: selbst wenn man ein Keramikmaterial entwickeln würde, das bei niedrigeren Temperaturen verdichtet werden kann, würden beim Sintern Risse entstehen, weil die Keramikfasern die Schwindung der Matrix nicht mitmachen.

Der Ansatz einer gasdichten Versiegelung von porösen Materialien wurde bisher von verschiedenen Forschergruppen und Firmen verfolgt. So wurden keramische bzw. glaskeramische Deckschichten via Plasmaspritzen von Al₂O₃-, Mullit-, Altglas-, CAS- und CZS-Glaspulvern auf porösen Substraten hergestellt, welche jedoch aufgrund von Rissen durch unterschiedliche Wärmeausdehnungskoeffizienten während der Hochtemperaturbehandlung eine Mindestporosität von 4% aufwiesen und somit nicht gasdicht waren. Des Weiteren wurden bereits diverse Glas- und Glas-Keramik-Lote in Form von organischen Streichpasten verarbeitet, um die porösen keramischen Oberflächen von Feststoffelektrolyt-Brennstoffzellen gegen Lufteinfluss zu versiegeln, siehe H.W. Fergus, J. Power Sources 147, S. 46 (2005). Allerdings ist die Einsatztemperatur dieser Systeme auf unter 1000°C beschränkt.

In US 6,716,275 B1 wird die endseitige Beschichtung poröser, für Filtrationen verwendbarer Keramikrohre mit einer Suspension von Glaspulvern in Amylacetat mittels eines Tauchbeschichtungsverfahrens berichtet. Die Poren an dem eingetauchten Ende des Rohres werden in einer anschließenden Hochtemperaturbehandlung durch das Aufschmelzen der Glaspulver versiegelt. Die Einsatztemperaturen sollen über 500°C liegen; in den Ausführungsbeispielen erfolgt ein Aufheizen bis auf 1000°C. Der Ausdehnungskoeffizient des eingesetzten Glases liegt bei 47 x 10⁻⁶ C⁻¹ zwischen 0 und 300°C.

In US 6,284,682 B1 wird eine Tauchbeschichtung eines porösen Substrates in einem Aluminium-Isopropoxid-Sol beschrieben, welcher sich eine Behandlung mit Phosphorsäure und eine Temperaturbehandlung bei 600°C anschließt. Hierdurch konnte, ausgehend von einer Porosität des Substrats von ca. 35%, eine Reduktion der offenen Porosität der Keramik auf 3% erreicht werden. Auch in diesem Fall sind die Versiegelungen nicht gasdicht, und die Einsatztemperaturen sind beschränkt.

US 5,925,228 schlägt die elektrophoretische Abscheidung eines Sols aus Tetraethoxysilan bzw. Mischungen von Tetraethoxysilan und Aluminium-sec.-butoxid und dessen anschließende Erwärmung auf 200°C zur Abdichtung der Poren einer Keramik vor. In diesem Verfahren ist es ausdrücklich gewünscht, dass das Material in die Poren des Substrats eindringt.

Andere Arbeitsgruppen nutzen CO₂- oder ArF-Excimer-Laser, um mit Hilfe hoher lokaler Energiedichten und eine sequentielle Abrasterung die Oberfläche von porösen Keramiken aufzuschmelzen. Durch die laterale Verteilung und Abkühlung der Keramikschmelze kann hierbei eine weitgehend geschlossene Deckschicht erzeugt werden. Allerdings sind diese Verfahren sehr aufwändig und kostenintensiv.

Eine Abdichtung von porösen Oberflächen unter Beibehaltung der besonderen mechanischen Eigenschaften, insbesondere des schadenstoleranten Bruchverhaltens, kann im Prinzip durch eine gasdichte Beschichtung an der Bauteiloberfläche erfolgen. Allerdings sind auch hier aus den obengenannten Gründen Sinterkeramiken ausgeschlossen. Das thermische Spritzen von keramischen Schichten auf Keramiksubstraten oder oxidkeramischen Faserverbundkeramiken ist bekannt, siehe z.B. W. Braue, Materialwissenschaften und Werkstofftech. 38(9), 690-697 (2007). Doch weisen thermisch gespritzte Schichten immer noch ein gewisses Maß an Porosität auf.

Im Bereich der Dentalkeramiken ist eine Verdichtung einer porösen Keramik oder eines porösen Metallgerüsts mittels Glasschmelzen bekannt, siehe EP 2 146 678 A1 und EP 0 241 384 A2. Würde man allerdings versuchen, mit den darin offenbarten Glasschmelzen einen porösen O-CMC zu infiltrieren, würde der Werkstoff sein schadenstolerantes Bruchverhalten verlieren. Außerdem sind solche Glassysteme bei Temperaturen oberhalb von 1000°C nicht stabil, da die Glasmatrix wieder erweichen würde.

Seit einigen Jahren werden auch Keramikkomponenten im Bereich von Brennstoffzellen (solid oxide fuel cells, SOFC) versiegelt, siehe EP 1008563 A1 und WO 2011/081736 A2. Hierbei werden monolithische Keramiken mit spezifischen Porositäten und bei relativ niedrigen Anwendungstemperaturen gefügt, und das Fügematerial muss spezifische Wärmeausdehnungskoeffizienten von über 10 x 10⁻⁶ K⁻¹ besitzen.

Gläser oder Polymere sind als Verschlussmaterial für O-CMC ungeeignet, weil diese bei den Arbeitstemperaturen, denen die O-CMC ausgesetzt werden müssen, erweichen und/oder degradieren.

Für das Fügen von Bauteilen oder Werkstücken aus Oxidkeramiken sind Fügematerialien erforderlich, die sich einfach aufbringen lassen und nach dem Fügen (Erhitzen - Abkühlen) eine stabile Bindung zwischen den Teilen liefern. Das Fügen solcher Keramiken mit einer Reihe von kommerziell erhältlichen Glasmaterialien ist in C. Gadelmeier et al., Advances in Science and Technology 88, 162-171 (2014) beschrieben. Die Temperaturen sollten beim Fügen aber grundsätzlich nicht zu hoch sein, um die keramischen Werkstücke nicht zu schädigen. Außerdem ist es wünschenswert, dass das Fügematerial einen Wärmeausdehnungskoeffizienten besitzt, der mit demjenigen der beidseitigen Werkstücke oder Bauteile kompatibel ist.
FERRARIS M ET AL: "Joining of machined SiC/SiC composites for thermonuclear fusion reactors", JOURNAL OF NUCLEAR MATERIALS, ELSEVIER BV, NL, Bd. 375, Nr. 3, 30. April 2008 (2008-04-30), Seiten 410-415,
ZHOU F: "Effect of adhesive composition on bonding of silicon nitride ceramic", CERAMICS INTERNATIONAL, ELSEVIER, AMSTERDAM, NL, Bd. 29, Nr. 3, 1. Januar 2003 (2003-01-01), Seiten 293-298,
LIN Y J ET AL: "Joining of mullite ceramics with yttrium aluminosilicate glass interlayers", CERAMICS INTERNATIONAL, ELSEVIER, AMSTERDAM, NL, Bd. 35, Nr. 3, 1. April 2009 (2009-04-01), Seiten 131 1-1315, und
SMEACETTO F ET AL: "Protective coatings for carbon bonded carbon fibre composites", CERAMICS INTERNATIONAL, ELSEVIER, AMSTERDAM, NL, Bd. 34, Nr. 5, 1. Juli 2008 (2008-07-01), Seiten 1297-1301,
offenbaren Verfahren zum Herstellen von keramischen Werkstücken, die mit einer yttriumhaltigen Glaskeramik-Schicht versehen sind, wobei zwei Werkstücke mit Hilfe der yttriumhaltigen Glaskeramik-Schicht gefügt werden.

Angesichts dieser Problematiken haben sich die Erfinder die Aufgabe gestellt, ein Verfahren bereitzustellen, mit dem sich entweder die Oberfläche von porösen keramischen Werkstücken wie O-CMC gasdicht verschließen lässt, wobei bei diesem Verfahren keine Temperaturen oberhalb von etwa 1250°C, vorzugsweise von 1200°C angewendet werden sollen bzw. müssen, so dass die keramischen Werkstücke nicht geschädigt werden, oder mit dem sich zwei Werkstücke aus keramischem Material, seien sie porös oder nicht porös, fügen lassen. Das Verfahren soll die mechanischen Eigenschaften der keramischen Werkstücke nicht negativ beeinflussen. Da das Verfahren für O-CMC geeignet sein soll, ist es erforderlich, dass der Abdichtungs-Werkstoff einen Wärmeausdehnungskoeffizienten (WAK) aufweist, der ihn mit den Wärmeausdehnungseigenschaften von O-CMC kompatibel macht. Günstig ist deshalb ein WAK im Bereich von ca. 5 bis 15 x 10⁻⁶ K⁻¹ über einen Großteil der Temperaturintervalle zwischen mindestens 200°C und 800°C, der möglichst individuell einstellbar sein sollte. Des Weiteren soll das Material des Abdichtungs-Werkstoffs auch bei hohen Temperaturen eine gute hydrolytische Beständigkeit (eine gute hydrothermale Beständigkeit) aufweisen. Die Erfindung soll auch ein entsprechendes, abgedichtetes Werkstück bereitstellen.

Die Aufgabe wird gelöst durch ein Verfahren zum Herstellen von porösen oxidkeramischen Werkstücken, die mit einer yttriumhaltigen Glaskeramik-Schicht versehen sind, umfassend die Schritte
(a) Bereitstellen einer Suspension von Glaspartikeln einer oxidischen Zusammensetzung, worin die Glaspartikel entweder die folgende Glas-Zusammensetzung

| | |
|---|---|
| Y₂O₃ | 10 - 20 Ma.-% |
| Al₂O₃ | 10 - 25 Ma.-% |
| SiO₂ | 5 - 10 Ma.-% |
| Li₂CO₃ | 0 - 15 Ma.-% |
| Na₂CO₃ | 5 - 15 Ma.-% mit |
| Li₂CO₃ + Na₂CO₃ | max. 15 Ma.-% |
| MgCO₃ | 0 - 30 Ma.-% |
| BaCO₃ | 10 - 30 Ma.-% , mit |
| MgCO₃ + BaCO₃ | max. 35 Ma.-% |
| H₃BO₃ | 15 - 30 Ma.-% |

oder die folgende Glas-Zusammensetzung

| | |
|---|---|
| Y₂O₃ | 20 - 30 Ma.-% |
| Al₂O₃ | 25 - 35 Ma.-% |
| SiO₂ | 45 - 55 Ma.-% |

aufweisen, in einem Suspensionsmittel,
(b) Aufbringen der Suspension auf eine Oberfläche eines porösen oxidkeramischen Werkstücks in Form einer Schicht,
(c) Entfernen des Suspensionsmittels und Aufheizen der Schicht auf eine Maximaltemperatur, bei der die Schicht zumindest erweicht,
(d) Halten der Schicht bei der erreichten Maximaltemperatur,
(e) Abkühlen der Schicht mit Hilfe eines Temperatur-Zeit-Regimes, bei dem sich mindestens eine yttriumhaltige Kristallphase bildet,
wobei die Maximaltemperatur bei <1250°C liegt, so dass eine Oberfläche des Werkstücks gasdicht mit der yttriumhaltigen Glaskeramik-Schicht derart beschichtet wird, dass die Glasschmelze nicht weiter als etwa 100 µm tief in das keramische Werkstück eindringt.

Außerdem wird die Aufgabe durch das vorstehend genannte Verfahren gelöst, worin:
- das Aufheizen in Schritt (c) mit einer Geschwindigkeit von mindestens 1,5 K/min erfolgt,
- die Schicht bei der erreichten Maximaltemperatur gemäß Schritt (d) für mindestens 30 min gehalten wird,
- das Temperatur-Zeit-Regime gemäß Schritt (e) mindestens die folgenden Stufen umfasst: Abkühlen der Schicht auf eine Temperatur, die 400 - 800 K unter der Maximaltemperatur liegt, wobei die Abkühlgeschwindigkeit geringer ist als die Aufheizgeschwindigkeit, Halten der Temperatur, die 400 - 800 K unter der Maximaltemperatur liegt, für mindestens 30 min, und Abkühlen der Schicht auf Raumtemperatur,
   wobei ein gasdicht verschlossenes poröses oxidkeramisches Werkstück entsteht, auf dessen Oberfläche eine Glaskeramik ausgebildet ist, die eine yttriumhaltige Kristallphase aufweist.

Als Glaspartikel-Suspension kann eine Suspension von Glaspartikeln verwendet werden, die zuvor in der gewünschten Zusammensetzung erschmolzen und vermahlen wurden. Die Teilchen haben vorzugsweise durchschnittlich einen Durchmesser d₅₀ von ca. 1-2 µm, können ggf. aber auch etwas kleiner oder größer sein. Als Suspensionsmittel kann Wasser, ein organisches Lösungsmittel oder ein Gemisch aus beidem verwendet werden. Als organisches Lösungsmittel kann beispielsweise ein Alkohol wie Methanol oder Ethanol oder ein AlkoholGemisch eingesetzt werden. Die Suspension wird vorzugsweise in einer Menge aufgetragen, die 0,025-0,25 g Glaszusammensetzung pro cm² entspricht. Dadurch erhält man Schichtdicken, die nach der Kristallisation im Bereich von ca. 100 µm bis 1 mm liegen. Die Auftragung kann über Tauch-, Sprüh- oder Lackierverfahren oder das Aufschlämmen der Suspension als Schicht auf der abzudichtenden Oberfläche erfolgen.

Die Wahl der Zusammensetzung der Glaspartikel muss mehreren Kriterien genügen. Zum einen müssen die Glaspartikel bei der zu erreichenden Maximaltemperatur des Verfahrens zumindest erweichen. Dabei ist darauf zu achten, dass die Glasschmelze keine allzu niedrige Viskosität annimmt, wenn sie zum Dichten einer porösen Oberfläche eines keramischen Werkstücks vorgesehen ist, um eine Infiltration der porösen Keramikmaterial-Oberfläche zu vermeiden. Unter "Vermeidung von Infiltration" bzw. "infiltrationsfrei" ist dabei zu verstehen, dass die Glasschmelze keinesfalls weiter als etwa 100 µm, vorzugsweise nicht weiter als etwa 75 µm und besonders bevorzugt maximal etwa 25-50 µm tief in das keramische Werkstück eindringt, dessen Poren in der Regel einen Durchmesser von etwa 1-10 µm besitzen. Der Schmelzpunkt der eingesetzten Ausgangsglas-Zusammensetzung muss in diesen Fällen daher in einem Bereich von unter 1200°C, vorzugsweise zwischen 1000°C und 1200°C liegen. Wenn die Glasschmelze zum Fügen vorgesehen ist, ist eine geringere Viskosität hinnehmbar, so dass sie auf mindestens 1350°C, dem Schmelzpunkt der Kristallphasen, erhitzt werden sollte.

Weiterhin muss das Glas eine Zusammensetzung aufweisen, bei der sich beim Abkühlen aus der Schmelze leicht Kristalle bilden. Durch die Kristallisation findet eine Viskositätserhöhung des heißen Beschichtungsmaterials statt, so dass dessen Fließfähigkeit schnell abnimmt. Auch dies trägt im Falle des Aufbringens einer gasdichten Beschichtung bzw. beim Fügen poröser Werkstücke dazu bei, dass die Beschichtung nicht in die Poren des Substrats eindringt. Das kristallisierte Beschichtungsmaterial sollte einen WAK im oben definierten gewünschten Korridor aufweisen. Die gebildeten Kristalle sollen eine gute thermohydrolytische Beständigkeit aufweisen.

Den Erfindern ist es gelungen, eine solche Glas-Zusammensetzung aufzufinden. Aufgrund des Yttriumgehalts können sich aus der Schmelze yttriumoxidhaltige Kristallphasen ausbilden, darunter meist Yttrium-Aluminiumoxide wie YAG, Al₂Y₄O₉, YAlO₃ und Y₃Al₂(AlO₄)₃, aber auch Yttrium-Silicate wie Y5(SiO₄)₃O. Diese Materialien tragen dazu bei, dass die kristallisierte Schicht einen thermischen Ausdehnungskoeffizienten (WAK) im gewünschten Zielbereich besitzt. Silicium und Aluminium tragen einerseits durch die Bildung der genannten Kristallphasen zur Einstellung des gewünschten WAK bei, zum anderen gehören sie zur Gruppe der Netzwerkbildner und tragen damit dazu bei, dass die Glasschmelze eine relativ hohe Viskosität besitzt. Silicium kristallisiert nicht nur vergesellschaftet mit Yttrium aus, sondern auch in reinen SiO₂-Kristallen wie Tridymit und Cristobalit. Die yttriumhaltigen Kristalle wie YAG und Yttrium-Disilikate besitzen außerdem eine hohe Hydrolysestabilität.

Der Yttriumgehalt der Glas-Zusammensetzung, bezogen auf Yttriumoxid, liegt vorzugsweise bei mindestens 10 Ma.-% und häufig nicht über 30 Ma.-% der Zusammensetzung. Der Aluminiumgehalt, bezogen auf Al₂O₃, liegt vorzugsweise bei mindestens 10 Ma.-% und häufig nicht über 35 Ma.-% der Zusammensetzung. Der Siliciumgehalt muss unter dem Aspekt der Kristallphasen nicht hoch gewählt werden; etwa 5 Ma.-% in der Zusammensetzung, bezogen auf SiO₂, können bereits ausreichen. Sofern allerdings keine wesentlichen sonstigen Anteile an Netzwerkbildnern vorhanden sind, sollte der Siliciumgehalt eher hoch sein, beispielsweise bis zu ca. 55 Ma.-% oder darüber.

Die Glas-Zusammensetzung kann weitere Komponenten enthalten. So können die Alkaliionen Na, K und/oder Li als Oxide, als Disilicate oder in Form von Na₂CO₃ bzw. Li₂CO₃, und/oder es können die Erdalkaliionen Mg und/oder Ba in Form ihrer Oxide, als Silicate oder als MgCO₃ bzw. BaCO₃ zugesetzt werden. Auch der Zusatz von Bor ist günstig, und zwar vor allem in denjenigen Fällen, in denen auch Alkali- oder Erdalkaliionen vorhanden sind. Denn Bor ist wie Silicium und Aluminium ein Netzwerkbildner und trägt damit zur Erhöhung der Viskosität der Glasschmelze bei. Der Anteil an Bor, angegeben als H₃BO₃, kann bei bis zu ca. 35 Ma.-% liegen.

Der Zusatz weitere Ionen ist nicht erforderlich; er ist gegebenenfalls aber auch nicht ausgeschlossen. Die Zusammensetzung sollte allerdings vorzugsweise frei von Phosphor, Kalium und den Elementen der Lanthaniden-Gruppe (hier als Ln bezeichnet) sein, einschließlich des Lanthans. "Frei von" soll im Sinne der vorliegenden Erfindung bedeuten, dass die so bezeichneten Elemente oder Verbindungen (hier Phosphor, Kalium bzw. Ln) nicht aktiv der Glasmischung zugesetzt werden. Es kann jedoch sein, dass diese einen gewissen Anteil an Verunreinigungen aufweist. Vorzugsweise liegt dieser jedoch nicht über 1 Ma.-% an P₂O₅, 1 Ma.-% an K₂O, bzw. 1 Ma.-% an Lanthaniden-Oxid, bezogen auf die Gesamtzusammensetzung, und stärker bevorzugt nicht über jeweils 0,1 Ma.-% dieser Komponenten in der Gesamtzusammensetzung.

Beim Durchführen des erfindungsgemäßen Verfahrens wandelt sich die aufgebrachte Glaspartikel-Suspension in eine Glaskeramik-Schicht mit einem hohen Kristallanteil um, wobei sich verbliebenes Glas, soweit vorhanden, in Poren/Lücken des Kristallverbundes befindet. Diese Glaskeramikbeschichtung haftet gut an der Oberfläche von keramischen Materialien, ohne aber in dessen Poren, soweit vorhanden, einzudringen. Das Temperatur-Regime ist mit der Zusammensetzung des Glases so abgestimmt, dass die beim Erwärmen des Pulvers entstehende Glasschmelze eine ausreichend hohe Viskosität besitzt, so dass eine Infiltration der porösen Keramik-Oberfläche vermieden wird.

Zur Vermeidung einer Infiltration von Poren des zu beschichtenden Keramikmaterials, sofern vorhanden, sollte das Aufheizen des Glases bis zur Schmelze nicht zu langsam erfolgen. 1 bis 2 K/min sind hierfür das Minimum; bevorzugt ist die Geschwindigkeit höher, beispielsweise kann sie bei mindestens 5 oder sogar mindestens 10K/min liegen.

Die Haltezeit bei der Maximaltemperatur dient dazu, dass sich das weiche Glas gleichmäßig auf der Substratoberfläche verteilt und gut daran anschmiegen kann. Diese Haltezeit ist zeitlich nicht zwingend einzugrenzen. Als Faustregel lässt sich jedoch sagen, dass sie beim Auftragen einer zum Abdichten des Keramikwerkstücks vorgesehenen Schicht mindestens 30 min. betragen sollte, weil das Glas in dieser Zeit eine dichte, gut haftende Schicht auf dem Substrat ausbilden kann. Die Zeit, die das Glas zum Fügen von Werkstücken auf der Maximaltemperatur gehalten werden sollte, richtet sich nach der Komplexität des Fügevorgangs. Auch hier gilt, dass eine dichte, gut haftende Schicht auf dem Substrat ausgebildet werden sollte, was jedoch aufgrund der höheren Temperaturen schneller gehen kann.

Zu Ende der Haltezeit wird die Glasschmelze abgekühlt, wobei sich im Falle der zum Abdichten des Keramikwerkstücks vorgesehenen Schicht die ggf. bereits vor dem Erreichen und während des Haltens auf der Maximaltemperatur begonnene Kristallbildung fortsetzt. Auch beim Fügen entstehen beim Aufheizen Kristalle, die dann im Bereich von ca. 1350°C aber wieder aufschmelzen, so dass ein homogenes Fügematerial vorliegt, das sich an beide zu fügenden Flächen optimal anschmiegt. Aus dieser reinen Schmelze bilden sich dann erst beim Abkühlen Kristalle. Zur Unterstützung der Kristallbildung sollte die Abkühlung jeweils langsam erfolgen, vorzugsweise mit einer Geschwindigkeit von 1-4 K/min. Die Abkühlung kann auf hohem Niveau unterbrochen werden, beispielsweise bei 400-800°C, dem sogenannten Transformations-Temperaturbereich ("TG"). Während dieser Transformationsphase wird die Restglasphase entspannt. Anschließend wird die Schicht auf Raumtemperatur abgekühlt. Die Geschwindigkeit dieser Abkühlphase ist nicht kritisch, sie kann beispielsweise bei 5 bis 15 K/min und vorzugsweise bei 10 K/min liegen, sie kann aber auch genauso langsam erfolgen wie zu Beginn der Abkühlphase.

Werden zwei oder mehr Werkstücke gefügt, so können die Werkstücke unter aktiver Aufbringung von Druck aneinander angelegt sein, dessen Vektor vorzugsweise in Richtung des Fügespaltes zeigt.

Das erfindungsgemäße Temperatur-Zeit-Regime trägt dazu bei, dass die entstehende Glaskeramik den gewünschten Wärmeausdehnungskoeffizienten erhält. Im Rahmen des genannten Temperatur-Zeit-Regimes lässt er sich durch die Wahl der einzelnen Parameter sehr fein einstellen. Dabei gilt die Regel, dass der Kristallisationsgrad umso höher ist, je höher die Kristallisationstemperatur gewählt wird und/oder je länger die Haltezeit bei der gewünschten Kristallisationstemperatur gewählt wird. Je höher der Kristallisationsgrad ist, desto höher ist der resultierende WAK.

Das Erhitzen des Glases kann in einem Ofen oder mit Hilfe eines Lasers erfolgen. Wird ein Laser eingesetzt, hat dies den Vorteil, dass neben einer flächigen Erhitzung (z.B. durch Rastern mit einem Laserscanner) auch eine punktuelle Erhitzung bewirkt werden kann, so dass empfindliche Komponenten der Werkstücke bzw. die Werkstücke im Wesentlichen als solche der Maximaltemperatur nicht ausgesetzt werden, was vor allem beim Fügen von Vorteil ist, weil dabei eine höhere Maximaltemperatur gewählt wird. Das Laserfügen ist auch deshalb günstig, weil es sich wesentlich schneller (im Minuten-Bereich) durchführen lässt als das Fügen unter Erhitzung in einem Ofen, wofür etwa eine oder sogar mehrere Stunden zu veranschlagen sind.

Die Erfindung betrifft auch ein mit dem erfindungsgemäßen Verfahren erhältliches poröses keramisches Werkstück mit einer abgedichteten Oberfläche und ein Werkstück aus mindestens zwei Werkstück-Elementen, die mit Hilfe einer in einem Fügespalt befindlichen, yttriumhaltigen Glaskeramik-Schicht wie oben definiert fest miteinander verbunden sind.

Die Erfindung betrifft außerdem die Verwendung einer Glaszusammensetzung, die als Kationen mindestens Silicium, Aluminium und Yttrium aufweist wie oben definiert und bei geeignetem Erhitzen und Abkühlen wie oben definiert mindestens eine yttriumhaltige Kristallphase ausbildet, zur Herstellung flächiger, gasdichter Abdeckungen poröser keramischer Werkstücke sowie als Fügematerial zum Fügen mindestens zweier keramischer Teil-Werkstücke. Sie betrifft weiterhin die Verwendung einer yttriumhaltige Kristallphasen aufweisenden Glaskeramik-Beschichtung wie oben definiert als gasdichte Beschichtung der Oberflächen von porösen keramischen Werkstücken und als Verbindungsmaterial zwischen zwei gefügten keramischen Werkstück-Komponenten.

Die Gasdichtigkeit von porösen beschichteten keramischen Substraten bleibt auch bei Temperaturen von oberhalb 600°C erhalten.

Da die Glasbeschichtung bzw. die Glaskeramik nicht in Poren des keramischen Substrats infiltriert, behält das Keramikmaterial selbst nach der Beschichtung sein schadenstolerantes Bruchverhalten.

Die Erfindung macht es möglich, dass poröse keramische Materialien wie O-CMC auf technischen Gebieten Anwendung finden, die ihnen bisher verschlossen waren. Weil dadurch O-CMC zur Verfügung stehen, die auch oberhalb von 600°C gasdicht sind, können diese z.B. auf dem Gebiet der Energieerzeugung, beispielsweise für stationäre Gasturbinen und Fluggasturbinen (dort z.B. als Schutz gegen Angriffe von sogenannten CMAS-Schmelzen/Stäuben) eingesetzt werden. Auch für Heißgas-/Abgasbehandlungen im Bereich der Verbrennungs-, der Chemie- und der Verfahrenstechnik und sonstige Anwendungen, bei denen das Problem der Heißgaskorrosion bei hohen Temperaturen z.B. den Einsatz von metallischen Rohren nicht zulässt, lassen sie sich einsetzen. Anwendungsmöglichkeiten ergeben sich im Korrosionsschutz weiterhin insbesondere zum Schutz von oxidischen Feuerfestkeramiken im Industrie-Ofenbau, in Zementdrehrohröfen oder bei der Müllverbrennung, bei der Schutz vor Angriffen aggressiver Medien wie Chlor-Alkali-Erdalkali-Verbindungen oder Schwefel-Alkali/Erdalkali-Verbindungen benötigt wird. In Brennöfen für technische Keramiken wird ein Schutz gegen Bleioxid-Dämpfe benötigt, den die erfindungsgemäß beschichteten keramischen Werkstücke ebenfalls bieten können.

Nachfolgend soll die Erfindung anhand von Beispielen näher erläutert werden.

### A. Beispiele für die Herstellung gasdicht verschlossener poröser Keramik-Werkstücke

Als Substrat wurden O-CMC-Platten aus Nextel 610 Fasern und einer Al₂O₃ bzw. Al₂O₃-ZrO₂-Matrix verwendet. Mittels Sprühtechnik wurde auf jeweils einer Oberfläche der Platten eine wässrige Suspension aufgebracht, die 50 Masse-% Pulver der Glaszusammensetzung 1 bzw. der Glaszusammensetzung 2 mit einer d₅₀ von 1-2µm enthielt. Der Auftrag erfolgte in einer Menge von 0,025-0,25 g Glas pro cm². Die Beschichtungen wurden getrocknet und nachfolgend einem Zeit-Temperatur-Programm zur Aufschmelzung und Kristallisation der Beschichtung unterzogen wie folgt: 2, 5 oder 10 K/min bis zur Maximaltemperatur, Haltezeit 1-10 Stunden, Abkühlen auf die Temperatur des Transformationsbereichs mit meist 2 bis 5 K/min, Haltezeit z.B. 1 Stunde, Abkühlen auf Raumtemperatur mit 10 K/min.

**Beispiel 1 - Glaszusammensetzung 1**

| | |
|---|---|
| BaCO₃ | 25 Ma.-% |
| Na₂CO₃ | 10 Ma.-% |
| H₃BO₃ | 22 Ma.-% |
| SiO₂ | 7,5 Ma.-% |
| Al₂O₃ | 14 Ma.-% |
| YAG (Y₂O₃ + Al₂O₃) | 21 Ma.-% |

Die Glaszusammensetzung weist einen Transformationsbereich (TG), in welchem sich die Restglasphase entspannen lässt, von 540-640°C auf.

Mit dieser Glaszusammensetzung wurden unter Einsatz unterschiedlicher Temperatur-Zeit-Regimes verschiedene keramisierte Glaslote hergestellt, wie aus der nachstehenden Tabelle 1a ersichtlich:

| **Aufheizrate [K/min]** | **Maximale T [°C]** | **Haltezeit [min]** | **Abkühlrate [K/min]** | **Bezeichnung** |
|---|---|---|---|---|
| 10 | 1200 | 60 | 2 | Gl1-P4a |
| 10 | 1000 | 60 | 2 | Gl1-P2 |
| 10 | 850 | 60 | 2 | Gl1-P1a |
| 5 | 1050 | 60 | 2 | Gl1-P3 |
| 5 | 850 | 60 | 2 | Gl1-P1b |
| 5 | 1200 | 60 | Frei | Gl1-P4b |
| 5 | 1200 | 60 | Frei | Gl1-P4c |
| 10 | 1300 | 60 | 2 | Gl1-P5a |
| 2 | 1200 | 600 | Frei | Gl1-P4ch |
| 10 | 850 | 600 | | Gl1-P1ch |
| 2 | 1200 | 60 | 5 | Gl1-P4cr |

Die WAK-Werte einer Reihe dieser Glaslote wurden für unterschiedliche Temperaturbereiche ermittelt. Die Ergebnisse sind der Tabelle 1b dargestellt:

| Bezeichnung | 22°C-100°C | 22°C-200°C | 22°C-300°C | 22°C-400°C | 200°C-300°C | 200°C-400°C | 200°C-500°C | 500°C-600°C | 600°C-700°C | 600°C-800°C |
|---|---|---|---|---|---|---|---|---|---|---|
| G1-P1b | | | | | 8,54 | 8,69 | 8,94 | | 17,09 | 17,33 |
| Gl1-P1ch | | | | | 9,95 | 10,24 | | 19,76 | | |
| Gl1-P2 | 8,6 | 8,59 | 8,88 | 9,12 | | | | 15,44 | | |
| Gl1-P3 | | | | | 9,98 | 9,85 | | | | |
| Gl1-P4c | | | | | 9,14 | 9,4 | 9,78 | | | |
| Gl1-P4cr | | | | | 9,35 | 9,57 | 9,92 | | | |

Aus Tabelle 1b lässt sich entnehmen, dass der WAK dieses Glases in Temperaturbereichen bis ca. 500°C auf Werte zwischen etwa 8 und 10 x 10⁻⁶ K⁻¹ eingestellt werden kann, bei Temperaturbereichen oberhalb von 500°C dann jedoch deutlich (auf Werte im Bereich von bis zu 20 x 10⁻⁶ K⁻¹) ansteigt, wobei die Anwendung relativ hoher Maximaltemperaturen und/oder langer Haltezeiten dazu führt, dass relativ hohe WAKs erzielt werden.

Aus der Glaszusammensetzung 1 kristallisierten die folgenden Phasen aus:

BaAl₂Si₂O₈

YAlO₃

Y₃Al₂(AlO₄)₃

Cristobalit

**Beispiel 2 - Glaszusammensetzung 2**

| | |
|---|---|
| SiO₂ | 48 Ma.-% |
| Al₂O₃ | 28 Ma.-% |
| Y₂O₃ | 24 Ma.-% |

Mit dieser Glaszusammensetzung wurden unter Einsatz unterschiedlicher Temperatur-Zeit-Regimes verschiedene keramisierte Glaslote hergestellt, wie aus der nachstehenden Tabelle 1b ersichtlich:

| **Aufheizrate [K/min]** | **maximale T [°C]** | **Haltezeit [min]** | **Abkühlrate [K/min]** | **Bezeichnung** |
|---|---|---|---|---|
| 10 | 1200 | 60 | 2 | Gl2-P2a |
| 5 | 1000 | 60 | frei | Gl2-P1 |
| 5 | 1200 | 60 | frei | Gl2-P2b |
| 10 | 1300 | 60 | 2 | Gl2-P3a |
| 2 | 1200 | 60 | 5 | Gl2-P2br |
| 2 | 1200 | 600 | frei | Gl2-P2ch |
| 10 | 850 | 600 | 5 | Gl2-P0ch |

Die WAK-Werte einer Reihe dieser Beschichtungen wurden für unterschiedliche Temperaturbereiche ermittelt. Die Ergebnisse sind der Tabelle 2b dargestellt:

| Bezeichnung | 200°C-300°C | 200°C-400°C | 200°C-500°C | 200°C-600°C | 200°C-700°C | 200°C-800°C | 200°C-900°C | 200°C-1000°C | 200°C-1100°C |
|---|---|---|---|---|---|---|---|---|---|
| Gl2-P1 | 6,17 | 6,42 | 6,58 | 6,7 | 6,8 | 6,9 | | | |
| Gl2-P2 | 7,54 | 7,77 | 7,91 | 8 | 8,07 | 8,1 | 8,17 | 8,25 | |
| Gl2-P2br | 7,22 | 7,38 | 7,47 | 7,55 | 7,62 | 7,69 | 7,79 | 7,91 | 8,08 |
| Gl2-P2ch | 6,56 | 6,84 | 7 | 7,12 | 7,22 | 7,14 | 7,26 | 7,38 | 8,76 |

Aus der Tabelle 2b ist ersichtlich, dass mit dieser Glaszusammensetzung je nach Temperatur-Zeit-Regime für diverse Temperaturbereiche ein WAK im Bereich von 6 und 9 x 10⁻⁶ K⁻¹ eingestellt werden kann.

Aus der Glaszusammensetzung 2 kristallisierten die folgenden Phasen aus:
Tridymit

Al₂Y₄O₉

YAlO₃

Y₅(SiO₄)₃O

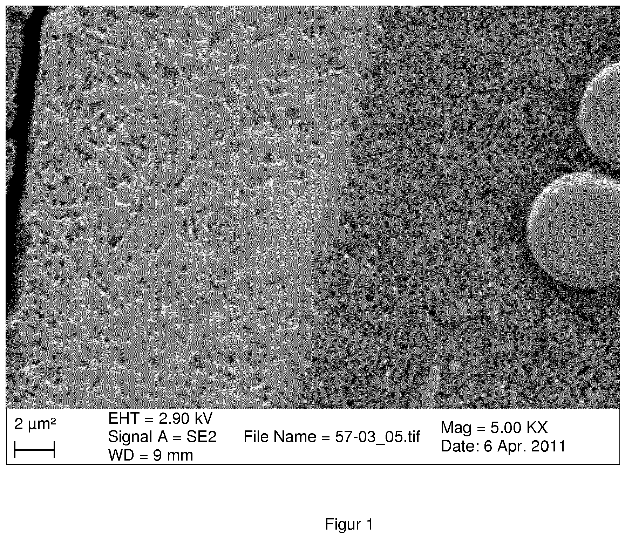

Beide Glaskeramikbeschichtungen hafteten gut an der O-CMC-Oberfläche, ohne den O-CMC zu infiltrieren. Dies lässt sich anhand von Fig. 1 erkennen, die ein Schliffbild eines Bereichs einer mit der fertigen kristallinen Beschichtung beschichteten Oberfläche zeigt, hergestellt aus Glas 2. In der linken Bildhälfte befindet sich das Keramik-Substrat und in der rechten Bildhälfte die kristalline Schicht. Aus der Figur 1 ist auch ersichtlich, dass die Verstärkungsfasern bei der Herstellung der Beschichtung nicht geschädigt wurden. Die erhaltenen Beschichtungen sind dicht, hochtemperaturstabil (die kristallinen Phasen erweichen bei Temperaturen auch von über 1000°C nicht) und bestehen aus hydrothermal beständigen Kristallphasen.

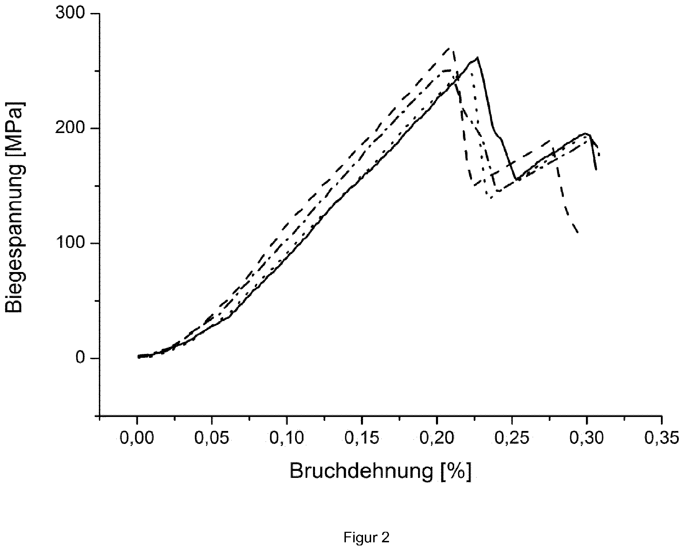

Da die Beschichtung nicht in das O-CMC-Substrat infiltrierte, behielt dieses selbst nach der Beschichtung sein schadenstolerantes Bruchverhalten. Dies zeigt sich bei Zugdehnungs-Untersuchungen, wie sie z.B. aus Figur 2 ersichtlich sind. Diese wurden an einer Probe mit den Abmessungen 10 x 40 x 1 mm (Werkstoff FW12) mit der Glaskeramik 2 nach DIN EN 658-3 vorgenommen. Wird ein schadensintolerantes Material der Dehnung unterworfen, so steigt seine Spannung bis zum Bruch und fällt sodann schlagartig ab. Ein schadenstolerantes Material zeigt dagegen eine Zugspannungskurve, die bei zunehmendem Zug ab einem bestimmten Wert infolge von Mikrorissen zwar etwas an Spannung verliert, bis zum endgültigen Bruch aber noch wesentlich weiter gedehnt werden kann. Würde das Glas bzw. die Glaskeramik in die Poren des Substrats infiltrieren, so würde dieses nicht mehr schadenstolerant reagieren, sondern spröde brechen. Aus Figur 2 lässt sich entnehmen, dass dies nicht der Fall ist.

### B. Beispiele für das Fügen von Keramiken

Das Fügen von Keramiken wurde mit Hilfe von Stäbchen untersucht, die die Maße 10 cm x 2 cm x 5mm besaßen und an ihrer Stirnseite (der 2 cm x 5 mm großen Fläche) gefügt wurden.

Gefügt wurden Paare von Stäbchen aus den folgenden Materialien:
Al₂O₃ O-CMC (porös) gegen Al₂O₃ O-CMC (porös)
Mullit (dicht) gegen Mullit (dicht)
SiC-SiC CMC (porös) gegen SiC-SiC CMC (porös)
Al₂O₃ (dicht) gegen Al₂O₃ (dicht).

Das erste Stäbchen wurde in allen Fällen mit Glaspulver-Suspension in einer Menge versehen, die zu einem Fügespalt von etwa 1 mm führte. Das zweite Stäbchen wurde an die Fügestelle angelegt, und die Fügepartner wurden entweder im Ofen oder mit Hilfe eines Lasers auf eine Temperatur >1350°C (Schmelzpunkt/Eutektikum der entstandenen Kristallphasen) erhitzt.

Im Falle der Erwärmung im Ofen wurde folgendes Temperatur/Zeit-Regime angewandt: 2, 5 oder 10 K/min bis zur Maximaltemperatur, Haltezeit 1-10 Stunden, Abkühlen auf die Temperatur des Transformationsbereichs mit meist 2 bis 5 K/min, Haltezeit z.B. 1 Stunde, Abkühlen auf Raumtemperatur mit 10 K/min. Es wurden auch Versuche mit einer zusätzlichen Haltezeit bei 1000-1100°C durchgeführt. Die Haltezeit sollte ca. 5-10 Kelvin niedriger als der endotherme Schmelzpeak aus der DTA Kurve sein. Ziel dieser Haltezeit ist ein besseres Verfließen der zähen/hochviskosen Glasschicht. Die Lage des endothermen Peaks (auch der des exothermen der Kristallisation) ist abhängig von der Korngröße des Ausgangsglases.

Im Falle der Erwärmung mittels Laser wurde die Maximaltemperatur von >1350°C wesentlich schneller erreicht. Die Fügestelle wurden anschließend langsam (mit ca. 2 K/min) und ohne Haltezeit im Transformationsbereich abgekühlt.

Als Fügematerial wurde die Glaszusammensetzung des obigen Beispiels 2 eingesetzt.

Beim Fügen der stirnseitig gefügten Mullit-Stäbchen mit Hilfe von Laserfügen wurde eine Festigkeit der Verbindung von 120 MPa erreicht.

## Patentansprüche

1. Verfahren zum Herstellen von porösen oxidkeramischen Werkstücken, die mit einer yttriumhaltigen Glaskeramik-Schicht versehen sind, umfassend die Schritte
(a) Bereitstellen einer Suspension von Glaspartikeln einer oxidischen Zusammensetzung, worin die Glaspartikel entweder die folgende Glas-Zusammensetzung
| | |
|---|---|
| Y₂O₃ | 10 - 20 Ma.-% |
| Al₂O₃ | 10 - 25 Ma.-% |
| SiO₂ | 5 - 10 Ma.-% |
| Li₂CO₃ | 0 - 15 Ma.-% |
| Na₂CO₃ | 5 - 15 Ma.-% mit |
| Li₂CO₃ + Na₂CO₃ | max. 15 Ma.-% |
| MgCO₃ | 0 - 30 Ma.-% |
| BaCO₃ | 10 - 30 Ma.-% , mit |
| MgCO₃ + BaCO₃ | max. 35 Ma.-% |
| H₃BO₃ | 15 - 30 Ma.-% |
oder die folgende Glas-Zusammensetzung
| | |
|---|---|
| Y₂O₃ | 20 - 30 Ma.-% |
| Al₂O₃ | 25 - 35 Ma.-% |
| SiO₂ | 45 - 55 Ma.-% |
aufweisen, in einem Suspensionsmittel,
(b) Aufbringen der Suspension auf eine Oberfläche eines porösen oxidkeramischen Werkstücks in Form einer Schicht,
(c) Entfernen des Suspensionsmittels und Aufheizen der Schicht auf eine Maximaltemperatur, bei der die Schicht zumindest erweicht,
(d) Halten der Schicht bei der erreichten Maximaltemperatur,
(e) Abkühlen der Schicht mit Hilfe eines Temperatur-Zeit-Regimes, bei dem sich mindestens eine yttriumhaltige Kristallphase bildet,
wobei die Maximaltemperatur bei <1250°C liegt, so dass eine Oberfläche des Werkstücks gasdicht mit der yttriumhaltigen Glaskeramik-Schicht derart beschichtet wird, dass die Glasschmelze nicht weiter als 100 µm tief in das keramische Werkstück eindringt.

2. Verfahren nach Anspruch 1,
worin:
- das Aufheizen in Schritt (c) mit einer Geschwindigkeit von mindestens 1,5 K/min erfolgt,
- die Schicht bei der erreichten Maximaltemperatur gemäß Schritt (d) für mindestens 30 min gehalten wird,
- das Temperatur-Zeit-Regime gemäß Schritt (e) mindestens die folgenden Stufen umfasst: Abkühlen der Schicht auf eine Temperatur, die 400 - 800 K unter der Maximaltemperatur liegt, wobei die Abkühlgeschwindigkeit geringer ist als die Aufheizgeschwindigkeit, Halten der Temperatur, die 400 - 800 K unter der Maximaltemperatur liegt, für mindestens 30 min, und Abkühlen der Schicht auf Raumtemperatur,
wobei ein gasdicht verschlossenes poröses oxidkeramisches Werkstück entsteht, auf dessen Oberfläche eine Glaskeramik ausgebildet ist, die eine yttriumhaltige Kristallphase aufweist.

3. Verfahren zum Herstellen von oxidkeramischen Werkstücken, die mit einer yttriumhaltigen Glaskeramik-Schicht versehen sind, umfassend die Schritte
(a) Bereitstellen einer Suspension von Glaspartikeln einer oxidischen Zusammensetzung, worin die Glaspartikel entweder die folgende Glas-Zusammensetzung
| | |
|---|---|
| Y₂O₃ | 10 - 20 Ma.-% |
| Al₂O₃ | 10 - 25 Ma.-% |
| SiO₂ | 5 - 10 Ma.-% |
| Li₂CO₃ | 0 - 15 Ma.-% |
| Na₂CO₃ | 5 - 15 Ma.-% mit |
| Li₂CO₃ + Na₂CO₃ | max. 15 Ma.-% |
| MgCO₃ | 0 - 30 Ma.-% |
| BaCO₃ | 10 - 30 Ma.-% , mit |
| MgCO₃ + BaCO₃ | max. 35 Ma.-% |
| H₃BO₃ | 15 - 30 Ma.-% |
oder die folgende Glas-Zusammensetzung
| | |
|---|---|
| Y₂O₃ | 20 - 30 Ma.-% |
| Al₂O₃ | 25 - 35 Ma.-% |
| SiO₂ | 45 - 55 Ma.-% |
aufweisen, in einem Suspensionsmittel,
(b) Aufbringen der Suspension auf eine Oberfläche eines oxidkeramischen Werkstücks in Form einer Schicht,
(c) Entfernen des Suspensionsmittels und Aufheizen der Schicht auf eine Maximaltemperatur, bei der die Schicht zumindest erweicht,
(d) Halten der Schicht bei der erreichten Maximaltemperatur,
(e) Abkühlen der Schicht mit Hilfe eines Temperatur-Zeit-Regimes, bei dem sich mindestens eine yttriumhaltige Kristallphase bildet,
wobei die Maximaltemperatur bei > 1350°C liegt, so dass zwei oder mehr Werkstücke mit Hilfe der yttriumhaltigen Glaskeramik-Schicht gefügt werden.

4. Verfahren nach Anspruch 3, worin:
nach dem Aufbringen der Suspension auf eine Oberfläche des keramischen Werkstücks in Form einer Schicht und vor dem Aufheizen der Schicht mindestens ein zweites Werkstück an die Oberfläche der Suspension angelegt oder angepresst wird, derart, dass ein Fügespalt zwischen den Werkstücken entsteht, in dem sich die Suspension befindet, wobei mit dem Verfahren ein Werkstück erzeugt wird, das aus mindestens zwei Werkstück-Komponenten gebildet ist, welche durch einen Fügespalt miteinander verbunden ist, der mit einer yttriumhaltigen Kristallphase gefüllt ist.

5. Verfahren nach einem der Ansprüche 1 bis 4, worin die Zusammensetzung der Glaspartikel frei von weiteren Kationen und/oder Anionen ist.

6. Verfahren nach einem der Ansprüche 1, 2 oder 5, **dadurch gekennzeichnet, dass** das Aufheizen der Schicht mit einer Geschwindigkeit von mindestens 10 K/min erfolgt und/oder die Maximaltemperatur ≤1200°C beträgt und/oder dass die Haltezeit bei der Maximaltemperatur mindestens 1 Stunde beträgt und/oder dass die die Schicht gemäß Schritt (e) auf 450-550°C abgekühlt wird und/oder dass die Abkühlung gemäß Schritt (e) mit einer Geschwindigkeit von 1-4 K/Min erfolgt und/oder dass die Haltezeit gemäß Schritt (f) 1 Stunde beträgt.

7. Oxidkeramisches Werkstück, dessen poröse Oberfläche gasdicht mit einer yttriumhaltige Kristallphasen aufweisenden Glaskeramik-Beschichtung verschlossen ist, wobei die Glaskeramik-Beschichtung aus Glaspartikeln mit einer oxidischen Zusammensetzung gewonnen wurde, worin die Glaspartikel entweder die folgende Glas-Zusammensetzung
| | |
|---|---|
| Y₂O₃ | 10 - 20 Ma.-% |
| Al₂O₃ | 10 - 25 Ma.-% |
| SiO₂ | 5 - 10 Ma.-% |
| Li₂CO₃ | 0 - 15 Ma.-% |
| Na₂CO₃ | 5 - 15 Ma.-% mit |
| Li₂CO₃ + Na₂CO₃ | max. 15 Ma.-% |
| MgCO₃ | 0 - 30 Ma.-% |
| BaCO₃ | 10 - 30 Ma.-% , mit |
| MgCO₃ + BaCO₃ | max. 35 Ma.-% |
| H₃BO₃ | 15 - 30 Ma.-% |
oder die folgende Glas-Zusammensetzung
| | |
|---|---|
| Y₂O₃ | 20 - 30 Ma.-% |
| Al₂O₃ | 25 - 35 Ma.-% |
| SiO₂ | 45 - 55 Ma.-% |
aufweisen und zwischen 200 °C und 600 °C einen Wärmeausdehnungskoeffizienten im Bereich von 5 - 15 x 10⁻⁶ K⁻¹ aufweist, wobei die Beschichtung nicht weiter als 100 µm tief in das oxidkeramische Werkstück eindringt.

8. Oxidkeramisches Werkstück, das mindestens zwei keramische, poröse oder nicht-poröse Teil-Werkstücke aufweist, die über einen Fügespalt miteinander verbunden sind, der mit einer yttriumhaltige Kristallphasen aufweisenden Glaskeramik gefüllt ist, wobei die Glaskeramik-Beschichtung aus Glaspartikeln mit einer oxidischen Zusammensetzung gewonnen wurde, worin die Glaspartikel entweder die folgende Glas-Zusammensetzung
| | |
|---|---|
| Y₂O₃ | 10 - 20 Ma.-% |
| Al₂O₃ | 10 - 25 Ma.-% |
| SiO₂ | 5 - 10 Ma.-% |
| Li₂CO₃ | 0 - 15 Ma.-% |
| Na₂CO₃ | 5 - 15 Ma.-% mit |
| Li₂CO₃ + Na₂CO₃ | max. 15 Ma.-% |
| MgCO₃ | 0 - 30 Ma.-% |
| BaCO₃ | 10 - 30 Ma.-% , mit |
| MgCO₃ + BaCO₃ | max. 35 Ma.-% |
| H₃BO₃ | 15 - 30 Ma.-% |
oder die folgende Glas-Zusammensetzung
| | |
|---|---|
| Y₂O₃ | 20 - 30 Ma.-% |
| Al₂O₃ | 25 - 35 Ma.-% |
| SiO₂ | 45 - 55 Ma.-% |
aufweisen und zwischen 200 °C und 600 °C einen Wärmeausdehnungskoeffizienten im Bereich von 5 - 15 x 10⁻⁶ K⁻¹ aufweist.

9. Oxidkeramisches Werkstück nach Anspruch 7 oder 8, wobei die Glaskeramik-Beschichtung zwischen 20° und 800°C einen Wärmeausdehnungskoeffizienten im Bereich von 5 - 15 x 10⁻⁶ K⁻¹, vorzugsweise im Bereich von 6 - 10 x 10⁻⁶ K⁻¹ aufweist.

10. Oxidkeramisches Werkstück nach einem der Ansprüche 7 bis 9, **dadurch gekennzeichnet, dass** es sich um eine oxidkeramische Faserverbundkeramik handelt.

11. Oxidkeramisches Werkstück nach einem der Ansprüche 7 bis 9, **dadurch gekennzeichnet, dass** die Zusammensetzung der Glaspartikel frei von weiteren Kationen und/oder Anionen ist.

12. Verwendung eines oxidkeramischen Werkstücks nach Anspruch 7 oder einem von Anspruch 7 abhängigen Anspruch für die Auskleidung von stationären Gasturbinen und Fluggasturbinen, von Vorrichtungen zur Heißgas-/Abgasbehandlung im Bereich der Verbrennungs-, der Chemie- und der Verfahrenstechnik, und/oder zum Zweck des Korrosionsschutzes, insbesondere in Form von oxidischen Feuerfestkeramiken im Industrie-Ofenbau, in Brennöfen für technische Keramiken, in Zementdrehrohröfen oder bei der Müllverbrennung.

## Claims

1. A process for producing porous oxide ceramic workpieces provided with a yttrium-containing glass-ceramic layer, comprising the steps of
(a) providing a suspension of glass particles of an oxide composition, the glass particles having either the following glass composition
| | |
|---|---|
| Y₂O₃ | 10 - 20 % by mass |
| Al₂O₃ | 10 - 25 % by mass |
| SiO₂ | 5 - 10 % by mass |
| Li₂CO₃ | 0 - 15 % by mass |
| Na₂CO₃ | 5 - 15 % by mass |
| with Li₂CO₃ + Na₂CO₃ | max. 15 % by mass |
| MgCO₃ | 0 - 30 % by mass |
| BaCO₃ | 10 - 30 % by mass |
| with MgCO₃ + BaCO₃ | max. 35 % by mass |
| H₃BO₃ | 15 - 30 % by mass |
or the following glass composition
| | |
|---|---|
| Y₂O₃ | 20 - 30 % by mass |
| Al₂O₃ | 25 - 35 % by mass |
| SiO₂ | 45 - 55 % by mass |
in a suspending agent,
(b) applying the suspension to a surface of a porous oxide-ceramic workpiece in the form of a layer,
(c) removing the suspending agent and heating the layer to a maximum temperature at which the layer at least softens,
(d) holding the layer at the maximum temperature reached,
(e) cooling the layer with the aid of a temperature-time regime at which at least one yttrium-containing crystal phase is formed,
wherein the maximum temperature is <1250°C such that a surface of the workpiece is gas-tightly coated with the yttrium-containing glass-ceramic layer such that the glass melt does not penetrate further than 100 µm into the ceramic workpiece.

2. The process according to claim 1, wherein:
- the heating in step (c) is carried out at a speed of at least 1,5 K/min,
- the layer is maintained at the maximum temperature reached in step (d) for at least 30 minutes,
- the temperature-time regime according to step (e) comprises at least the following steps: cooling the layer to a temperature which is 400 - 800 K below the maximum temperature, the cooling rate being lower than the heating rate, maintaining the temperature which is 400 - 800 K below the maximum temperature for at least 30 min, and cooling the layer to room temperature,
wherein a gas-tight sealed porous oxide-ceramic workpiece is produced, on the surface of which a glass ceramic is formed which has a yttrium-containing crystal phase.

3. A process for producing oxide ceramic workpieces provided with a yttrium-containing glass-ceramic layer comprising the steps of
(a) providing a suspension of glass particles of an oxide composition, the glass particles having either the following glass composition
| | |
|---|---|
| Y₂O₃ | 10 - 20 % by mass |
| Al₂O₃ | 10 - 25 % by mass |
| SiO₂ | 5 - 10 % by mass |
| Li₂CO₃ | 0 - 15 % by mass |
| Na₂CO₃ | 5 - 15 % by mass |
| with Li₂CO₃ + Na₂CO₃ | max. 15 % by mass |
| MgCO₃ | 0 - 30 % by mass |
| BaCO₃ | 10 - 30 % by mass |
| with MgCO₃ + BaCO₃ | max. 35 % by mass |
| H₃BO₃ | 15 - 30 % by mass |
or the following glass composition
| | |
|---|---|
| Y₂O₃ | 20 - 30 % by mass |
| Al₂O₃ | 25 - 35 % by mass |
| SiO₂ | 45 - 55 % by mass |
in a suspension medium,
(b) applying the suspension to a surface of an oxide ceramic workpiece in the form of a layer,
(c) removing the suspension medium and heating the layer to a maximum temperature at which the layer at least softens,
(d) maintaining the layer at the maximum temperature reached,
(e) cooling the layer with the aid of a temperature-time regime in which at least one yttrium-containing crystal phase is formed,
the maximum temperature being > 1350°C, so that two or more workpieces are joined using the yttrium-containing glass-ceramic layer.

4. The process according to claim 3, wherein:
after the application of the suspension to a surface of the ceramic workpiece in the form of a layer and before the layer is heated, at least one second workpiece is applied or pressed against the surface of the suspension in such a way that a joining gap is formed between the workpieces in which the suspension is located, the method being used to produce a workpiece which is formed from at least two workpiece components which are connected to one another by a joining gap which is filled with a yttrium-containing crystal phase.

5. The process according to any one of Claims 1 to 4 wherein the composition of the glass particles is free of further cations and/or anions.

6. The process according to one of claims 1, 2 or 5, **characterized in that** the heating of the layer takes place at a rate of at least 10 K/min and/or the maximum temperature is ≤1200°C and/or that the holding time at the maximum temperature is at least 1 hour and/or that the layer according to step (e) is cooled to 450-550°C and/or that the cooling according to step (e) takes place at a rate of 1-4 K/min and/or that the holding time according to step (f) is 1 hour.

7. An oxide ceramic workpiece whose porous surface is sealed gas-tight with a glass ceramic coating comprising yttrium-containing crystal phases, wherein the glass ceramic coating has been obtained from glass particles having an oxide composition, the glass particles having either the following glass composition
| | |
|---|---|
| Y₂O₃ | 10 - 20 % by mass |
| Al₂O₃ | 10 - 25 % by mass |
| SiO₂ | 5 - 10 % by mass |
| Li₂CO₃ | 0 - 15 % by mass |
| Na₂CO₃ | 5 - 15 % by mass |
| with Li₂CO₃ + Na₂CO₃ | max. 15 % by mass |
| MgCO₃ | 0 - 30 % by mass |
| BaCO₃ | 10 - 30 % by mass |
| with MgCO₃ + BaCO₃ | max. 35 % by mass |
| H₃BO₃ | 15 - 30 % by mass |
or the following glass composition
| | |
|---|---|
| Y₂O₃ | 20 - 30 % by mass |
| Al₂O₃ | 25 - 35 % by mass |
| SiO₂ | 45 - 55 % by mass |
and has a coefficient of thermal expansion in the range of 5-15 x 10⁻⁶ K⁻¹ between 200°C and 600°C, the coating penetrating no more than 100 µm deep into the oxide ceramic workpiece.

8. An oxide ceramic workpiece comprising at least two ceramic, porous or nonporous parts joined together by a joining gap filled with a glass ceramic comprising yttrium-containing crystal phases, wherein the glass ceramic coating has been obtained from glass particles having an oxide composition, the glass particles having either the following glass composition
| | |
|---|---|
| Y₂O₃ | 10 - 20 % by mass |
| Al₂O₃ | 10 - 25 % by mass |
| SiO₂ | 5 - 10 % by mass |
| Li₂CO₃ | 0 - 15 % by mass |
| Na₂CO₃ | 5 - 15 % by mass |
| with Li₂CO₃ + Na₂CO₃ | max. 15 % by mass |
| MgCO₃ | 0 - 30 % by mass |
| BaCO₃ | 10 - 30 % by mass |
| with MgCO₃ + BaCO₃ | max. 35 % by mass |
| H₃BO₃ | 15 - 30 % by mass |
or the following glass composition
| | |
|---|---|
| Y₂O₃ | 20 - 30 % by mass |
| Al₂O₃ | 25 - 35 % by mass |
| SiO₂ | 45 - 55 % by mass |
and has a coefficient of thermal expansion in the range of 5-15 x 10⁻⁶ K⁻¹ between 200°C and 600°C.

9. The oxide ceramic workpiece according to claim 7 or 8, wherein the glass ceramic coating has a coefficient of thermal expansion in the range of 5-15 x 10⁻⁶ K⁻¹, preferably in the range of 5-15 x 10⁻⁶ K⁻¹ between 20°C and 800°C.

10. The oxide ceramic workpiece according to one of claims 7 to 9, **characterized in that** it is an oxide ceramic fibre composite ceramic.

11. The oxide ceramic workpiece according to one of claims 7 to 9, **characterized in that** the composition of the glass particles is free of further cations and/or anions.

12. Use of an oxide ceramic workpiece according to claim 7 or a claim dependent on claim 7 for the lining of stationary gas turbines and flight gas turbines, of devices for hot gas/exhaust gas treatment in the field of combustion, chemical and process engineering and/or for the purpose of corrosion protection, in particular in the form of oxide refractory ceramics in industrial furnace construction, in kilns for technical ceramics, in rotary cement kilns or in waste incineration.

## Revendications

1. Procédé de production de pièces en oxydes céramiques poreuses, qui sont pourvues d'une couche de vitrocéramique contenant de l'yttrium, comprenant les étapes suivantes:
(a) préparer une suspension de particules de verre ayant une composition d'oxydes, dans lequel les particules de verre présentent
soit la composition de verre suivante:
| | |
|---|---|
| Y₂O₃ | 10 - 20 % en masse |
| Al₂O₃ | 10 - 25 % en masse |
| SiO₂ | 5 - 10 % en masse |
| Li₂CO₃ | 0 - 15 % en masse |
| Na₂CO₃ | 5 - 15 % en masse |
| avec Li₂CO₃ + Na₂CO₃ | max. 15 % en masse |
| MgCO₃ | 0 - 30 % en masse |
| BaCO₃ | 10 - 30 % en masse |
| avec MgCO₃ + BaCO₃ | max. 35 % en masse |
| H₃BO₃ | 15 - 30 % en masse |
soit la composition de verre suivante:
| | |
|---|---|
| Y₂O₃ | 20 - 30 % en masse |
| Al₂O₃ | 25 - 35 % en masse |
| SiO₂ | 45 - 55 % en masse, |
dans un milieu de suspension,
(b) appliquer la suspension sur une surface d'une pièce en oxydes céramiques poreuse sous la forme d'une couche,
(c) enlever le milieu de suspension et chauffer la couche à une température maximale, à laquelle la couche au moins se ramollit,
(d) maintenir la couche à la température maximale atteinte,
(e) refroidir la couche à l'aide d'un régime température-temps, avec lequel il se forme au moins une phase cristalline contenant de l'yttrium,
dans lequel la température maximale est inférieure à 1250°C, de telle manière qu'une surface de la pièce soit revêtue de façon étanche au gaz avec la couche vitrocéramique contenant de l'yttrium, de telle façon que le verre fondu ne pénètre pas à une profondeur de plus de 100 µm dans la pièce céramique.

2. Procédé selon la revendication 1, dans lequel
- on effectue le chauffage à l'étape (c) avec une vitesse d'au moins 1,5 K/min,
- on maintient la couche à la température maximale atteinte selon l'étape (d) pendant au moins 30 min,
- le régime température-temps selon l'étape (e) comprend au moins les étapes suivantes: refroidissement de la couche à une température, qui se situe 400 - 800 K en dessous de la température maximale, dans lequel la vitesse de refroidissement est inférieure à la vitesse de chauffage, maintien de la température, qui se situe 400 - 800 K en dessous de la température maximale, pendant au moins 30 min, et refroidissement de la couche à la température ambiante,
dans lequel il se forme une pièce en oxydes céramiques poreuse fermée de façon étanche au gaz, sur la surface de laquelle est formée une vitrocéramique qui présente une phase cristalline contenant de l'yttrium.

3. Procédé de production de pièces en oxydes céramiques, qui sont pourvues d'une couche de vitrocéramique contenant de l'yttrium, comprenant les étapes suivantes:
(a) préparer une suspension de particules de verre ayant une composition d'oxydes, dans lequel les particules de verre présentent
soit la composition de verre suivante:
| | |
|---|---|
| Y₂O₃ | 10 - 20 % en masse |
| Al₂O₃ | 10 - 25 % en masse |
| SiO₂ | 5 - 10 % en masse |
| Li₂CO₃ | 0 - 15 % en masse |
| Na₂CO₃ | 5 - 15 % en masse |
| avecLi₂CO₃ + Na₂CO₃ | max. 15 % en masse |
| MgCO₃ | 0 - 30 % en masse |
| BaCO₃ | 10 - 30 % en masse |
| avec MgCO₃ + BaCO₃ | max. 35 % en masse |
| H₃BO₃ | 15 - 30 % en masse |
soit la composition de verre suivante:
| | |
|---|---|
| Y₂O₃ | 20 - 30 % en masse |
| Al₂O₃ | 25 - 35 % en masse |
| SiO₂ | 45 - 55 % en masse, |
dans un milieu de suspension,
(b) appliquer la suspension sur une surface d'une pièce en oxydes céramiques sous la forme d'une couche,
(c) enlever le milieu de suspension et chauffer la couche à une température maximale, à laquelle la couche au moins se ramollit,
(d) maintenir la couche à la température maximale atteinte,
(e) refroidir la couche à l'aide d'un régime température-temps, avec lequel il se forme au moins une phase cristalline contenant de l'yttrium,
dans lequel la température maximale est supérieure à 1350°C, de telle manière que deux ou plusieurs pièces soient jointes à l'aide de la couche vitrocéramique contenant de l'yttrium.

4. Procédé selon la revendication 3, dans lequel, après l'application de la suspension sur une surface de la pièce en céramique sous la forme d'une couche et avant le chauffage de la couche, on pose ou on presse au moins une deuxième pièce sur la surface de la suspension, de telle manière qu'il se forme entre les pièces une fente de jonction, dans laquelle la suspension se trouve, dans lequel on produit avec le procédé une pièce qui est formée d'au moins deux composants de pièce, qui sont assemblés l'un à l'autre par une fente de jonction, qui est remplie d'une phase cristalline contenant de l'yttrium.

5. Procédé selon l'une quelconque des revendications 1 à 4, dans lequel la composition des particules de verre est exempte d'autres cations et/ou anions.

6. Procédé selon une des revendications 1, 2 ou 5, **caractérisé en ce que** l'on effectue le chauffage de la couche avec une vitesse d'au moins 10 K/min et/ou la température maximale est inférieure ou égale à 1200°C et/ou **en ce que** le temps de maintien à la température maximale vaut au moins 1 heure et/ou **en ce que** l'on refroidit la couche selon l'étape (e) à 450-550°C et/ou **en ce que** l'on effectue le refroidissement selon l'étape (e) avec une vitesse de 1-4 K/min et/ou **en ce que** le temps de maintien selon l'étape (f) vaut 1 heure.

7. Pièce en oxydes céramiques, dont la surface poreuse est fermée de façon étanche au gaz avec un revêtement vitrocéramique présentant des phases cristallines contenant de l'yttrium, dans laquelle le revêtement vitrocéramique a été obtenu avec des particules de verre ayant une composition d'oxydes, dans laquelle les particules de verre présentent
soit la composition de verre suivante:
| | |
|---|---|
| Y₂O₃ | 10 - 20 % en masse |
| Al₂O₃ | 10 - 25 % en masse |
| SiO₂ | 5 - 10 % en masse |
| Li₂CO₃ | 0 - 15 % en masse |
| Na₂CO₃ | 5 - 15 % en masse |
| avec Li₂CO₃ + Na₂CO₃ | max. 15 % en masse |
| MgCO₃ | 0 - 30 % en masse |
| BaCO₃ | 10 - 30 % en masse |
| avec MgCO₃ + BaCO₃ | max. 35 % en masse |
| H₃BO₃ | 15 - 30 % en masse |
soit la composition de verre suivante:
| | |
|---|---|
| Y₂O₃ | 20 - 30 % en masse |
| Al₂O₃ | 25 - 35 % en masse |
| SiO₂ | 45 - 55 % en masse, |
et présente entre 200°C et 600°C un coefficient de dilatation thermique compris dans la plage de 5 à 15 x 10⁻⁶ K⁻¹, dans laquelle le revêtement ne pénètre pas à une profondeur de plus de 100 µm dans la pièce en oxydes céramiques.

8. Pièce en oxydes céramiques, qui présente au moins deux parties de pièce céramiques, poreuses ou non poreuses, qui sont assemblées l'une à l'autre par une fente de jonction qui est remplie de vitrocéramique présentant des phases cristallines contenant de l'yttrium, dans laquelle le revêtement vitrocéramique a été obtenu avec des particules de verre ayant une composition d'oxydes, dans laquelle les particules de verre présentent soit la composition de verre suivante:
| | |
|---|---|
| Y₂O₃ | 10 - 20 % en masse |
| Al₂O₃ | 10 - 25 % en masse |
| SiO₂ | 5 - 10 % en masse |
| Li₂CO₃ | 0 - 15 % en masse |
| Na₂CO₃ | 5 - 15 % en masse |
| avec Li₂CO₃ + Na₂CO₃ | max. 15 % en masse |
| MgCO₃ | 0 - 30 % en masse |
| BaCO₃ | 10 - 30 % en masse |
| avec MgCO₃ + BaCO₃ | max. 35 % en masse |
| H₃BO₃ | 15 - 30 % en masse |
soit la composition de verre suivante:
| | |
|---|---|
| Y₂O₃ | 20 - 30 % en masse |
| Al₂O₃ | 25 - 35 % en masse |
| SiO₂ | 45 - 55 % en masse, |
et présente entre 200°C et 600°C un coefficient de dilatation thermique compris dans la plage de 5 à 15 x 10⁻⁶ K⁻¹.

9. Pièce en oxydes céramiques selon la revendication 7 ou 8, dans laquelle le revêtement vitrocéramique présente entre 20°C et 800°C un coefficient de dilatation thermique compris dans la plage de 5 à 15 x 10⁻⁶ K⁻¹, de préférence dans la plage de 6 à 10 x 10⁻⁶ K⁻¹.

10. Pièce en oxydes céramiques selon l'une quelconque des revendications 7 à 9, **caractérisée en ce qu'**elle est une céramique composite de fibres d'oxydes céramiques.

11. Pièce en oxydes céramiques selon l'une quelconque des revendications 7 à 9, **caractérisée en ce que** la composition des particules de verre est exempte d'autres cations et/ou anions.

12. Utilisation d'une pièce en oxydes céramiques selon la revendication 7 ou une revendication dépendant de la revendication 7 pour le revêtement de turbines à gaz stationnaires et de turbines à gaz d'avion, de dispositifs pour le traitement de gaz chauds/gaz d'échappement dans le domaine des techniques de combustion, de la chimie et des processus technologiques, et/ou dans un but de protection contre la corrosion, en particulier sous la forme de céramiques réfractaires d'oxydes dans la construction de fours pour l'industrie, dans des fours de cuisson pour des céramiques techniques, dans des fours tubulaires de cimenterie ou lors de la combustion d'ordures.
